# EUROPEAN PATENT APPLICATION

(11) **EP 1 717 608 A1**
(43) Date of publication of application: **02.11.2006**
(21) Application number: 06290691.2
(22) Date of filing: 28.04.2006
(51) Int. Cl.: G02B 1/11, G02B 5/20

(54) **Filter for display apparatus and plasma display apparatus comprising filter**

(30) Priority: 29.04.2005 KR 20050036049; 29.04.2005 KR 20050036057
(71) Applicant: LG Electronics Inc., Yongdungpo-gu Seoul (KR)
(72) Inventor: Cha, Hongrae, Seocho-gu Seoul (KR)
(74) Representative: Vignesoult, Serge L. M.

(57) **Abstract**

A filter for a display apparatus and a plasma display apparatus comprising the filter are provided. The filter for the display apparatus has a structure in that an anti-reflection layer (120) is formed on a front surface of one base film layer (110) and an electromagnetic interference shielding layer (130) is formed on a rear surface of the base film layer. Further, the filter for the display apparatus includes an adhesive layer (340) having various functions. A ground member (560) is formed at an edge surface of the electromagnetic interference shielding layer (130). Accordingly, the functions of the filter for the display apparatus and the functions of the plasma display apparatus comprising the filter improve efficiently. The manufacturing cost decreases and the manufacturing yield increases.

## Description

### BACKGROUND OF THE INVENTION

### Field of the Invention

This document relates to a display apparatus, and more particularly, to a filter for a display apparatus and a plasma display apparatus comprising the filter.

### Description of the Related Art

With the rapid progress of semiconductor technologies in recent years, a trend toward low voltage and low power consumption of various electronic apparatuses and miniaturization, thinness and lightness in weight of electronic devices have been shown. Accordingly, the demands for flat display apparatuses have rapidly increased as an electronic display apparatus suitable for the new environment in accordance with the trend.

The flat display apparatuses such as a plasma display apparatus, a liquid crystal display, an organic light emitting diodes have been developed. In particular, since the plasma display apparatus can be manufactured to be thin and light, and to have a large-sized screen, the plasma display apparatus has been considered as a next generation display apparatus.

The display apparatuses each have special optical characteristics depending on their kind. The display apparatuses have a problem in that reflective light is generated on its display surface by external light. Further, the display apparatuses have another problem in that electromagnetic waves or near-infrared rays are emitted from the display surface when driving the display apparatus. To overcome the above problems, the display apparatus has a filter formed over the display surface. The filter comprises a plurality of functional layers capable of solving the above-described problems. The filter is manufactured by correspondingly forming each of the functional layers on each of base film layers, and then stacking the functional layers using an adhesive. Accordingly, there are problems in that the number of manufacturing processes of the display apparatus increases and the manufacturing yield decreases by an increase in the number of manufacturing processes of the plurality of functional layer and an increase in the number of stacking process of the plurality of functional layer. Further, the manufacturing cost of the display apparatus increases.

### SUMMARY OF THE INVENTION

Accordingly, an object of the present invention is to solve at least the problems and disadvantages of the background art.

According to one aspect, there is provided a filter for a display apparatus comprising a base film layer, an anti-reflection layer formed on one surface of the base film layer, and an electromagnetic interference shielding layer formed on the other surface of the base film layer.

According to another aspect, there is provided a filter for a display apparatus comprising a base film layer, an electromagnetic interference shielding layer formed on the base film layer, and an adhesive layer formed on the electromagnetic interference shielding layer, wherein the adhesive layer has at least one of a near infrared ray blocking function or a color correction function.

According to still another aspect, there is provided a filter for a display apparatus comprising a base film layer, an anti-reflection layer formed on a front surface of the base film layer, an electromagnetic interference shielding layer formed on a rear surface of the base film layer, and a ground member for contacting the electromagnetic interference shielding layer at an edge surface of the electromagnetic interference shielding layer.

According to further still another aspect, there is provided a plasma display apparatus comprising any one of the filters according to the above aspects.

### BRIEF DESCRIPTION OF THE DRAWINGS

The invention will be described in detail with reference to the following drawings in which like numerals refer to like elements.

FIG. 1 illustrates a filter for a display apparatus according to a first embodiment of the present invention;

FIG. 2 illustrates a plasma display apparatus comprising the filter for the display apparatus according to the first embodiment of the present invention;

FIG. 3 illustrates a filter for a display apparatus according to a second embodiment of the present invention;

FIG. 4 illustrates a plasma display apparatus comprising the filter for the display apparatus according to the second embodiment of the present invention;

FIG. 5 illustrates a filter for a display apparatus according to a third embodiment of the present invention;

FIG. 6 illustrates a method of manufacturing the filter for the display apparatus according to the third embodiment of the present invention;

FIG. 7 illustrates another method of manufacturing the filter for the display apparatus according to the third embodiment of the present invention;

FIG. 8 illustrates a plasma display apparatus comprising the filter for the display apparatus according to the third embodiment of the present invention;

FIG. 9 illustrates still another method of manufacturing the filter for the display apparatus according to the third embodiment of the present invention; and

FIG. 10 illustrates another structure of a plasma display apparatus comprising the filter for the display apparatus according to the third embodiment of the present invention.

### DETAILED DESCRIPTION OF PREFERRED EMBODIMENTS

Preferred embodiments of the present invention will be described in a more detailed manner with reference to the drawings.

A filter for a display apparatus according to embodiments of the present invention comprises a base film layer, an anti-reflection layer formed on one surface of the base film layer, and an electromagnetic interference shielding layer formed on the other surface of the base film layer.

It is preferable that the filter for the display apparatus further comprises an adhesive layer formed on the electromagnetic interference shielding layer.

It is preferable that the filter for the display apparatus further comprises a protective layer formed on the adhesive layer.

It is preferable that the anti-reflection layer comprises at least one of an external light absorption type or an external light scattering type.

It is preferable that the electromagnetic interference shielding layer comprises a mesh type or a sputter type.

It is preferable that the anti-reflection layer is formed directly on a front surface of the base film layer, and the electromagnetic interference shielding layer is formed directly on a rear surface of the base film layer.

A filter for a display apparatus according to the embodiments of the present invention comprises a base film layer, an electromagnetic interference shielding layer formed on the base film layer, and an adhesive layer formed on the electromagnetic interference shielding layer, wherein the adhesive layer has at least one of a near infrared ray blocking function or a color correction function.

It is preferable that the adhesive layer comprises at least one of a near infrared ray blocking material or a color correction material.

It is preferable that the near infrared ray blocking material comprises at least one of a near infrared ray blocking pigment or a near infrared ray blocking dye.

It is preferable that the color correction material comprises at least one of a color correction pigment or a color correction dye.

It is preferable that the filter for the display apparatus further comprises an anti-reflection layer for absorbing or scattering external light.

It is preferable that the filter for the display apparatus further comprises a protective layer formed on the adhesive layer.

It is preferable that the electromagnetic interference shielding layer comprises a mesh type or a sputter type.

A filter for a display apparatus according to the embodiments of the present invention comprises a base film layer, an anti-reflection layer formed on a front surface of the base film layer, an electromagnetic interference shielding layer formed on a rear surface of the base film layer, and a ground member for contacting the electromagnetic interference shielding layer at an edge surface of the electromagnetic interference shielding layer.

It is preferable that the ground member extends to a perimeter of a front surface of the anti-reflection layer.

It is preferable that the ground member extends to a perimeter of a rear surface of the electromagnetic interference shielding layer.

It is preferable that the ground member extends to a perimeter of a front surface of the anti-reflection layer, and to a perimeter of a rear surface of the electromagnetic interference shielding layer.

It is preferable that the ground member comprises a conductive film.

It is preferable that the ground member comprises a conductive tape.

It is preferable that edges of the base film layer, the anti-reflection layer and the electromagnetic interference shielding layer substantially equal to one another.

It is preferable that the filter for the display apparatus further comprises an adhesive layer formed on a rear surface of the electromagnetic interference shielding layer.

It is preferable that the adhesive layer has at least one of a near infrared ray blocking function or a color correction function.

It is preferable that the adhesive layer comprises at least one of a near infrared ray blocking material or a color correction material.

It is preferable that the filter for the display apparatus further comprises a protective layer formed on a rear surface of the adhesive layer.

It is preferable that the electromagnetic interference shielding layer comprises a mesh type or a conductive film type.

It is preferable that the anti-reflection layer comprises at least one of an external light absorption type or an external light scattering type.

It is preferable that the anti-reflection layer is formed directly on the front surface of the base film layer, and the electromagnetic interference shielding layer is formed directly on the rear surface of the base film layer.

A plasma display apparatus comprises any one of the filters according to the embodiments.

It is preferable that the filter comprises a glass filter or a film filter.

Hereinafter, exemplary embodiments of the present invention will be described in detail with reference to the attached drawings. The above and/or other aspects and advantages of the prevent invention will become apparent and more readily appreciated from the following description of the exemplary embodiments, taken in conjunction with the attached drawings. Like reference numerals refer to like elements throughout.

<First Embodiment>

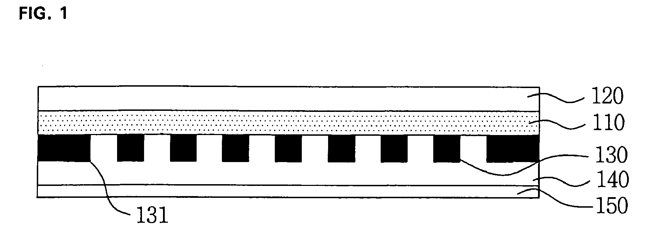

FIG. 1 illustrates a filter for a display apparatus according to a first embodiment of the present invention.

As shown in FIG. 1, a filter for a display apparatus according to a first embodiment of the present invention comprises a base film layer 110, an anti-reflection layer 120, and an electromagnetic interference shielding layer 130.

The base film layer 110 serves as a base for forming the anti-reflection layer 120. The base film layer 110 is formed of a transparent material capable of transmitting display light of the display apparatus. Preferably, the base film layer 110 is formed of a PET (Polyethyleneterephthalate) film, a TAC (Tantalum Carbide) film, or the like.

The anti-reflection layer 120 is formed on one surface of the base film layer 110. The anti-reflection layer 120 according to the first embodiment of the present invention uses at least one of an external light absorption type or an external light scattering type. In other words, an external light absorption type of anti-reflection layer, an external light scattering type of anti-reflection layer, or a composite anti-reflection layer of an external light absorption type of anti-reflection layer and an external light scattering type of anti-reflection layer may be used.

The external light absorption type of anti-reflection layer comprises a plurality of refraction layers with different refractive indexes. By absorbing the external light through the plurality of refraction layers with the different refractive indexes, the external light absorption type of anti-reflection layer has an anti-reflection function. In other words, the external light absorption type of anti-reflection layer has a stack structure of a first refraction layer of a relatively high refractive index and a second refraction layer of a relatively low refractive index. The first refraction layer and the second refraction layer make a set, and the set forms a unit anti-reflection layer. If necessary, the external light absorption type of anti-reflection layer may have a stack structure of a plurality of unit anti-reflection layers. The first refraction layer comprises TiO₂ or SnO₂ with a refractive index of about 1.46. The second refraction layer comprises SiO₂ with a refractive index of about 1.65.

The external light scattering type of anti-reflection layer comprises a mixed layer of a first material forming the anti-reflection layer and a second material having particles of the size, that is more than the size of particles of the first material. Thus, the external light scattering type of anti-reflection layer has a curved portion formed on its surface. By scattering the external light through the curved portion, the reflection of the external light is suppressed.

The electromagnetic interference shielding layer 130 is formed on the other surface opposite one surface of the base film layer 110, on which the anti-reflection layer 120 is formed. The electromagnetic interference shielding layer 130 prevents electromagnetic waves generated in the display apparatus from being emitted through a front surface thereof. The electromagnetic interference shielding layer 130 according to the first embodiment of the present invention uses a mesh type or a sputter type.

The mesh type of electromagnetic interference shielding layer 130 is shown in FIG. 1. The mesh type of electromagnetic interference shielding layer 130 is formed by forming a conductive metal layer in the form of mesh pattern on the base film layer 110. An end of the mesh type of electromagnetic interference shielding layer 130 has a ground part 131 for grounding the conductive metal layer of the mesh pattern.

The sputter type of electromagnetic interference shielding layer has a structure of (DMD)n of a dielectric layer D and a metal layer M. The dielectric layer D is substantially formed of a transparent conductive material such as ITO, ZnO. The metal layer M is formed of a metal with a low resistance such as Ag. A value of n being the stack number of the layers included in the sputter type of electromagnetic interference shielding layer is inversely proportional to a resistance of the sputter type of electromagnetic interference shielding layer. However, an increase in the value of n increases the manufacturing cost. Thus, it is necessary to set the optimum value of n in consideration of the manufacturing cost. The sputter type of electromagnetic interference shielding layer has not only an electromagnetic interference shielding function but also a near-infrared ray absorption function.

In the filter for the display apparatus according to the first embodiment of the present invention, the anti-reflection layer 120 is formed directly on the front surface of the base film layer 110 and the electromagnetic interference shielding layer 130 is formed directly on the rear surface of the base film layer 110. Thus, the number of manufacturing processes decreases and the manufacturing yield increases.

In other words, since the anti-reflection layer is not formed on a separate base film layer and the electromagnetic interference shielding layer 130 is not formed on a separate base film layer, the number of the manufacturing processes of each of the functional layers and the stack number of the functional layers decrease. Further, the occurrence of defection arising from some cause such as entrance of unwanted substances in the stack process of the functional layers decreases.

An adhesive layer 140 is formed on the electromagnetic interference shielding layer 130. The adhesive layer 140 adheres the filter for the display apparatus according to the first embodiment of the present invention to the display apparatus or another function layers.

A protective layer 150 is formed on the adhesive layer 140. The protective layer 150 protects the completed filter. In the first embodiment of the present invention, the protective layer 150 is formed on only the adhesive layer 140 to protect the adhesive layer 140. However, if necessary, the protective layer 150 may be formed on the anti-reflection layer or an edge surface of the filter. After forming the filter on the display apparatus, the protective layer 150 is removed.

Each of the functional layers of the filter of the present invention is not limited to the first embodiment of the present invention. The functional layers may be added or removed to meet the functional demand of the display apparatus. Further, the formation order of each of the functional layers may be changed for the convenience of the manufacturing processes of the filter.

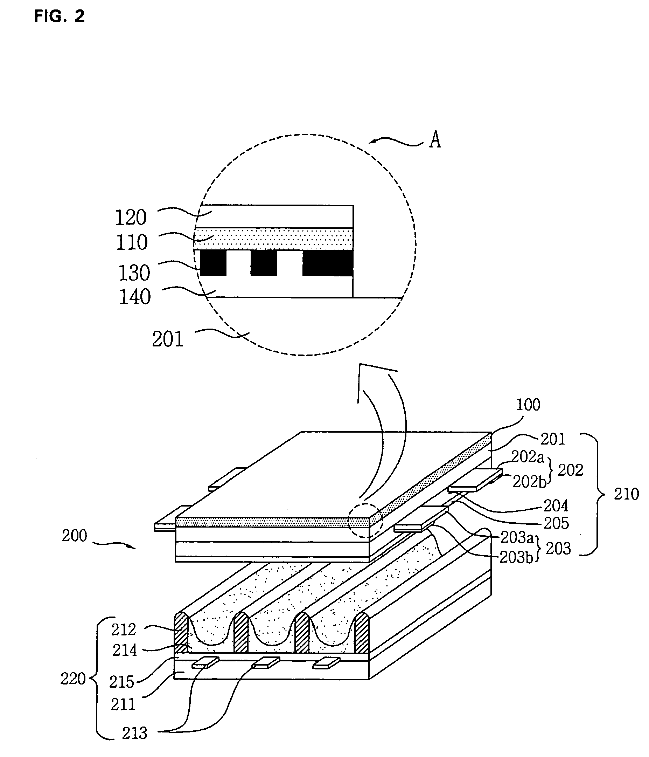

FIG. 2 illustrates a plasma display apparatus comprising the filter for the display apparatus according to the first embodiment of the present invention.

As shown in FIG. 2, the plasma display apparatus according to the first embodiment of the present invention comprises a plasma display panel 200 and a filter 100 formed on the plasma display panel 200.

The plasma display panel 200 comprises a front panel 210 and a rear panel 220 which are coupled in parallel to oppose to each other at a given distance therebetween. A plurality of scan electrodes 202 and a plurality of sustain electrodes 203 are formed in pairs on a front glass substrate 201 of the front panel 210 being a display surface, on which an image is displayed, to form a plurality of maintenance electrode pairs. A plurality of address electrodes 213 are arranged on a rear glass substrate 211 of the rear panel 220 constituting a rear surface to intersect the plurality of maintenance electrode pairs.

The scan electrode 202 and the sustain electrode 203 each comprise transparent electrodes 202a and 203a made of a transparent indium-tin-oxide (ITO) material and bus electrodes 202b and 203b. The scan electrode 202 and the sustain electrode 203 are covered with an upper dielectric layer 204. A protective layer 205 is formed on the upper dielectric layer 204.

A plurality of barrier ribs 212 are formed on the rear panel 220 to form a plurality of discharge cells. The plurality of address electrodes 213 are arranged in parallel with the barrier ribs 212. Red (R), green (G) and blue (B) phosphors 214 are coated on the address electrodes 213. A lower dielectric layer 215 is formed between the address electrodes 113 and the phosphors 114. A mere example of the structure of the plasma display panel is illustrated in FIG. 2. Accordingly, if necessary, the structure of the electrode or the structure of the barrier rib in the plasma display panel may be changed.

The barrier ribs 212 formed between the front panel 210 and the rear panel 220 form one unit cells. Each of the cells is filled with an inert gas containing a main discharge gas such as neon (Ne), helium (He) or a Ne-He gas mixture and a small amount of xenon (Xe). When a high frequency voltage generates a discharge, the inert gas within the cells generates vacuum ultraviolet rays. The vacuum ultraviolet rays emit the phosphors 214 formed between the barrier ribs 212 such that the image is displayed.

A plasma display module is manufactured by assembling a frame, a driving apparatus (not shown), and the like, on a rear surface of the plasma display panel 200 for displaying the image. Then, a case (not shown), and the like, for deciding an outward shape is formed on the plasma display module to completes the plasma display apparatus.

Since the plasma display apparatus of the above-described structure displays the image by applying the high frequency for the generation of a plasma discharge, it emits more electromagnetic waves through its display surface than a color CRT or a liquid crystal display.

Accordingly, the plasma display apparatus according to the first embodiment of the present invention comprises the filter (refer to FIG.1) for the display apparatus according to the first embodiment of the present, which is formed on the plasma display panel 400. A structure of the filter 100 included in the plasma display apparatus according to the first embodiment of the present invention will be described below in more detail with reference to a region A indicated in FIG. 2, which is a sectional view of the plasma display apparatus. The filter 100 of the plasma display apparatus comprises a base film layer 110, the anti-reflection layer 120 formed directly on a front surface of the base film layer 110, the electromagnetic interference shielding layer 130 formed directly on a rear surface of the base film layer 110, and the adhesive layer 140 for adhering the filter 100 on the front substrate 201 of the plasma display panel 200.

Since the characteristic of the filter 100 has been sufficiently described with reference to FIG. 1, a description thereof is omitted.

As described above, since the plasma display apparatus according to the first embodiment of the present invention comprises the filter for the display apparatus according to the first embodiment of the present invention, the filter for the plasma display apparatus has the more excellent electromagnetic wave shielding effect than the electromagnetic wave shielding effect of the filters included in other kinds of display apparatuses. In addition, this improves the manufacturing yield and reduces the manufacturing cost.

The filter according to the first embodiment of the present invention may be formed in the form of a film type or a glass type. The type of the filter is determined depending on the structure in which the filter is formed on the plasma display panel. The film type filter is that, as shown in FIG. 2, the filter 100 is attached directly on the plasma display panel 200. The glass type filter is that the filter 100 is adhered on a given glass substrate spaced from the plasma display panel 200.

The filter for the display apparatus according to the first embodiment of the present invention has the structure in which each of the functional layers for improving various functions of the display apparatus is formed directly on one base film layer, without separately forming each of the functional layers. In particular, the filter used in the plasma display apparatus needs to have various functions in comparison with the filters used in other kinds of display apparatuses. Accordingly, since the filter for the display apparatus according to the first embodiment of the present invention is used in the plasma display apparatus, this provides sufficiently effects such as an improvement in the manufacturing efficiency, a decrease in the manufacturing cost of the plasma display apparatus.

<Second Embodiment>

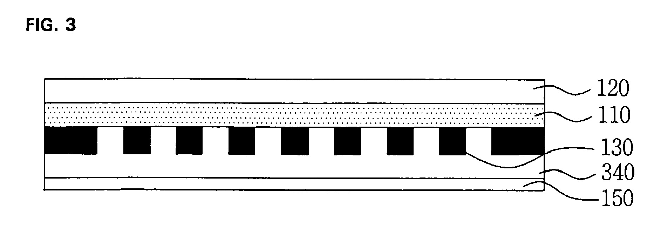

FIG. 3 illustrates a filter for a display apparatus according to a second embodiment of the present invention.

As shown in FIG. 3, the filter for the display apparatus according to the second embodiment of the present invention comprises a base film layer 110, an electromagnetic interference shielding layer 130, and an adhesive layer 340.

Unlike the filter for the display apparatus according to the first embodiment of the present invention, the filter for the display apparatus according to the second embodiment of the present invention comprises the adhesive layer 340 having at least one of a near infrared ray blocking function or a color correction function.

The adhesive layer 340 comprises at least one of a near infrared ray blocking material or a color correction material to provide the near infrared ray blocking function or color correction function. It is preferable that the near infrared ray blocking material uses at least one of a near infrared ray blocking pigment and a near infrared ray blocking dye.

Moreover, the color correction material uses at least one of a color correction pigment or a color correction dye. The color correction function refers to a display light color correction function for correcting the color of display light generated by driving the display apparatus. The display apparatus has its own specific display optical characteristic in accordance with its kind. The display optical characteristic may be divided into two cases. It may be divided into one case where a color of a specific wavelength range is seen clearer than colors of the other wavelength ranges, and the other case where a color of a specific wavelength range are rarely recognized by human naked eyes compared to colors of the other wavelength ranges. The one may correct the color by reducing the external radiation of light of the specific wavelength range, and the other may correct the color by increasing the external radiation of the light of the specific wavelength.

The adhesive layer 340 according to the second embodiment of the present invention comprises a display light color correction material for the display light color correction. It is preferable that the display light color correction material uses at least one of amine-based dye, sulfur-amine-based dye, metal oxide pigment or organic pigment.

Here, the present invention is not limited to the method where the near infrared ray blocking function or the color correction function of the adhesive layer is implemented by adding the above-described materials to the adhesive layer 340. For example, considering that near infrared rays are blocked by a conductive film stacking structure, and the like, the adhesive layer of the present invention may have the near infrared ray blocking functions or the color correction function by changing the structure of the adhesive layer other than the material addition method.

As described above, since the filter according to the second embodiment of the present invention comprises the adhesive layer 340 having the near infrared ray blocking function or the color correction function, the number of manufacturing processes decreases and the manufacturing yield increases.

That is, since a separate function layer having the near infrared ray blocking function is not formed on a separate base film layer and a separate function layer having the color correction function is not formed on a separate base film layer, the number of manufacturing processes of the function layers and the number of stacking processes of the function layers decrease. Furthermore, the occurrence of defection arising from some cause such as entrance of unwanted substances in the stack process of the functional layers decreases.

The filter according to the second embodiment of the present invention further comprises an anti-reflection layer 120 for absorption or scattering of external light. Since the filter according to the second embodiment of the present invention comprises the adhesive layer 340 having the various functions, in the same way as the first embodiment, the anti-reflection layer 120 is formed directly on the front surface of one base film layer 110 and the electromagnetic interference shielding layer 130 is formed directly on the rear surface of one base film layer 110, the number of manufacturing processes of the filter decreases and the manufacturing yield increases.

The filter according to the second embodiment of the present invention further comprises a protective layer 150. The electromagnetic interference shielding layer 130 uses at least one of a mesh type or a sputter type. Since the characteristics of the filter for the display apparatus according to the second embodiment of the present invention substantially equal to those of the filter for the display apparatus according to the first embodiment of the present invention are sufficiently described with reference to FIG. 1, a description thereof is omitted.

Each of the functional layers of the filter of the present invention is not limited to the second embodiment of the present invention. The functional layers may be added or removed to meet the functional demand of the display apparatus. Further, the formation order of each of the functional layers may be changed for the convenience of the manufacturing processes of the filter.

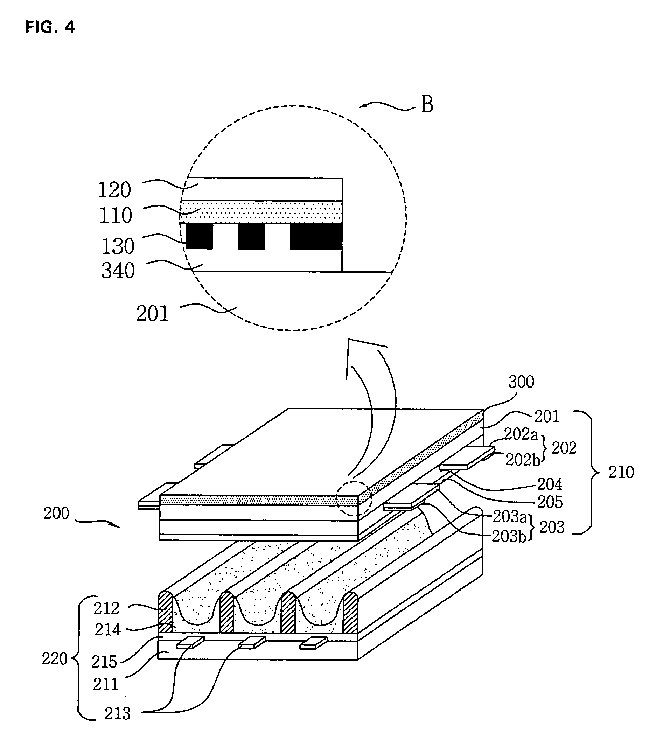

FIG. 4 illustrates a plasma display apparatus comprising the filter for the display apparatus according to the second embodiment of the present invention.

As shown in FIG. 4, the plasma display apparatus according to the second embodiment of the present invention comprises a plasma display panel 200 and a filter 300 formed on the plasma display panel 200.

The plasma display apparatus emits not only electromagnetic waves but also near infrared rays induced by an inert gas such as Ne, Xe. The near infrared rays are very close to the wavelength of remote controllers of home appliances, thus causing malfunction of the plasma display apparatus. In addition, the plasma display apparatus is characterized in that light with the wavelength range of orange color is emitted more than other kinds of display apparatuses in accordance with the characteristics of the phosphor.

Accordingly, the plasma display apparatus according to the second embodiment of the present invention comprises the filter (refer to FIG. 3) according to the second embodiment of the present invention formed on the plasma display panel 200.

A structure of the filter 300 included in the plasma display apparatus according to the second embodiment of the present invention will be described below in more detail with reference to a region B indicated in FIG. 4, which is a sectional view of the plasma display apparatus. The filter 300 of the plasma display apparatus comprises one base film layer 110, the anti-reflection layer 120 formed directly on the front surface of the base film layer 110, the electromagnetic interference shielding layer 130 formed directly on the rear surface of the base film layer 110, and the adhesive layer 340 for adhering the filter 300 on the front substrate 201 of the plasma display panel 200 and having at least one of the near infrared ray blocking function or the color correction function.

The characteristics and the effect of the plasma display apparatus according to the second embodiment of the present invention substantially equal to those of the plasma display apparatus described with reference to FIGS. 1 to 3 are omitted.

As described above, since the plasma display apparatus according to the second embodiment of the present invention comprises the filter the display apparatus according to the second embodiment of the present invention, an increase in the manufacturing yield and a decrease in the manufacturing cost are achieved, and the functions of the plasma display apparatus are further improved.

<Third Embodiment>

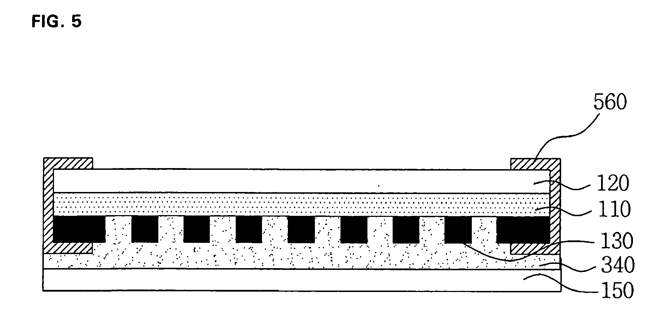

FIG. 5 illustrates a filter for a display apparatus according to a third embodiment of the present invention.

As shown in FIG. 5, the filter for the display apparatus according to the third embodiment of the present invention comprises a base film layer 110, an anti-reflection layer 120, an electromagnetic interference shielding layer 130, and a ground member 560.

Unlike the first and second embodiments of the present invention, the filter for the display apparatus according to the third embodiment of the present invention comprises the ground member 560 for contacting the electromagnetic interference shielding layer 130 at an edge surface of the electromagnetic interference shielding layer 130. Preferably, the ground member 560 uses a conductive tape. Further, it is preferable that the ground member 560 is formed of a conductive film. The conductive tape or the conductive film is formed along the edge surface of the electromagnetic interference shielding layer 130 to secure a ground space for grounding the electromagnetic interference shielding layer 130, and thus the electromagnetic interference shielding layer 130 is easily grounded.

The electromagnetic interference shielding layer requires a ground member for grounding the electromagnetic interference shielding layer. In the third embodiment of the present invention, a front surface or a rear surface of the electromagnetic interference shielding layer does not need to be exposed for separately contacting the electromagnetic interference shielding layer to the ground member. The base film layer 110, the anti-reflection layer 120 and the electromagnetic interference shielding layer 130 each have a substantially equal edge. Here, the equal edge means that the length of each of sides of the base film layer 110, the anti-reflection layer 120 and the electromagnetic interference shielding layer 130 equals to one another.

After forming the base film layer and the anti-reflection layer so as to expose the front surface or the rear surface of the electromagnetic interference shielding layer, a process for removing perimeters of the base film layer and the anti-reflection layer is not necessary. The size of the perimeters of the base film layer and the anti-reflection layer, and the like, is less than the size of a perimeter of the electromagnetic interference shielding layer. A stacking process performed after precisely aligning each of the base film layer and the anti-reflection layer, and the like, is not necessary. Since the ground member contact the edge surface of the electromagnetic interference shielding layer in the third embodiment of the present invention, the number of the manufacturing processes of the filter decreases, the manufacturing yield increases, and the ground operation is easily performed by the security of the ground space.

Since the ground member 560 extends to a perimeter of a front surface of the anti-reflection layer 120 in the third embodiment of the present invention, the ground space of the ground member 560 is secured more easily and the electromagnetic interference shielding layer 130 is grounded more stably. Since the ground member 560 extends to a perimeter of a rear surface of the electromagnetic interference shielding layer 130, a contact surface of the ground member 560 and the electromagnetic interference shielding layer 130 is wide and the electromagnetic interference shielding layer 130 is grounded more stably. Further, when the ground member 560 extends to the perimeter of the front surface of the anti-reflection layer 120 and to the perimeter of the rear surface of the electromagnetic interference shielding layer 130, the above-described effects further increase.

The ground member 560 is connected to a ground voltage source of the display apparatus.

As described above, since the filter according to the third embodiment of the present invention has a simpler structure, the number of the manufacturing processes of the filter decreases and the manufacturing yield increases.

The filter for the display apparatus according to the third embodiment of the present invention further comprises an adhesive layer 340 having a near infrared ray blocking function or a color correction function, and a protective layer 150. Since the characteristics and the effect of the filter for the display apparatus according to the third embodiment of the present invention substantially equal to those of the filter for the display apparatus according to the first and second embodiments of the present invention are sufficiently described with reference to FIGS. 1 to 5, a description thereof is omitted.

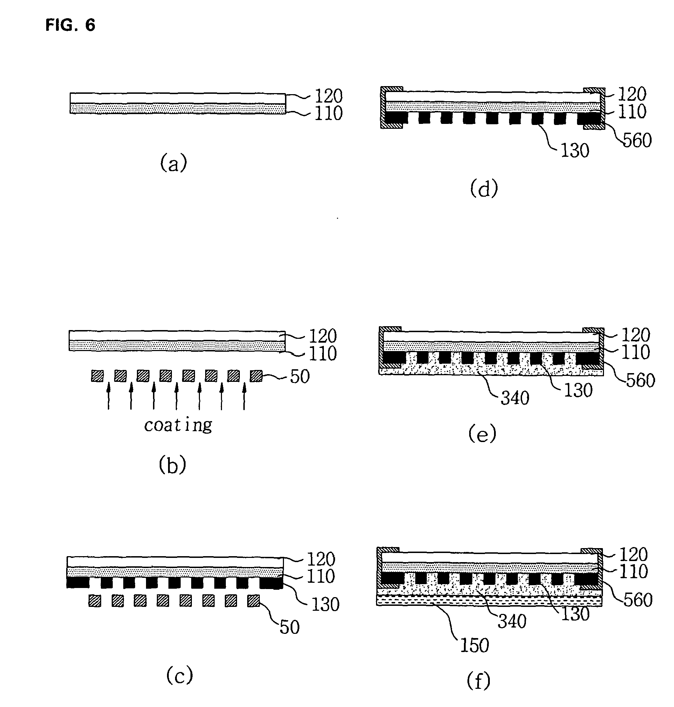

FIG. 6 illustrates a method of manufacturing the filter for the display apparatus according to the third embodiment of the present invention.

As shown in FIG. 6, the filter according to the third embodiment of the present invention is manufactured by the following processes.

As shown in (a) of FIG. 6, the anti-reflection layer 120 is formed on the front surface of the transparent base film layer 110. As shown in (b) of FIG. 6, a mask 50, on which a pattern for forming the electromagnetic interference shielding layer 130 is formed, is arranged on the rear surface of the base film layer 110. As shown in (c) of FIG. 6, the electromagnetic interference shielding layer 130 is formed by coating a conductive material in accordance with the pattern formed on the mask 50. As shown in (d) of FIG. 6, the ground member 560 is formed along the edge surface of the electromagnetic interference shielding layer 130. As shown in (e) of FIG. 6, the adhesive layer 340 is formed on the rear surface of the electromagnetic interference shielding layer 130. As shown in (f) of FIG. 6, the protective layer 150 is formed on the rear surface of the adhesive layer 340.

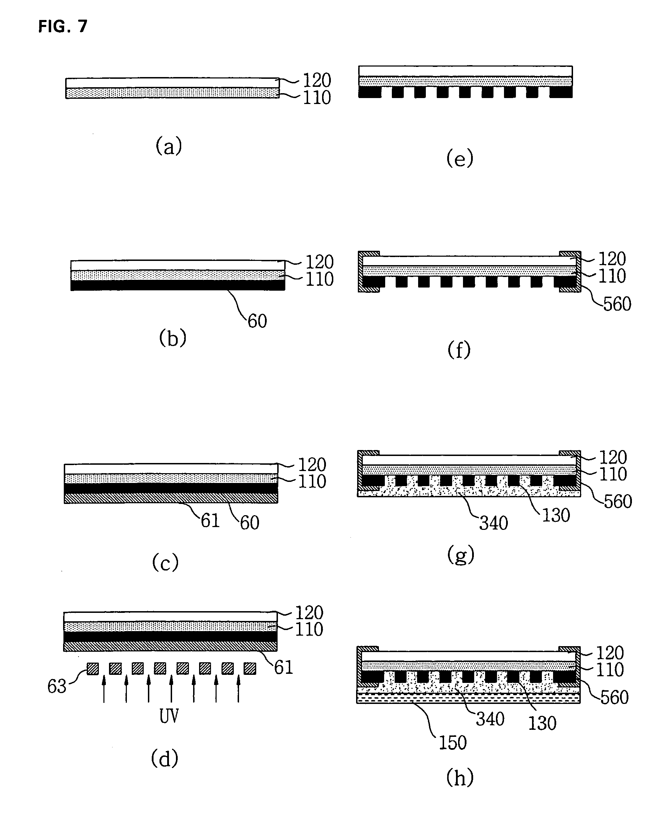

FIG. 7 illustrates another method of manufacturing the filter for the display apparatus according to the third embodiment of the present invention.

As shown in FIG. 7, the filter according to the third embodiment of the present invention is manufactured by the following processes.

As shown in (a) of FIG. 7, the anti-reflection layer 120 is formed on the front surface of the base film layer 110. As shown in (b) of FIG. 7, a conductive metal layer 60 is formed on the rear surface of the base film layer 110. As shown in (c) of FIG. 7, photoresist 61 is coated on the conductive metal layer 60. As shown in (d) of FIG. 7, a mask 63, on which a pattern for forming the electromagnetic interference shielding layer 130 is formed, is arranged on the photoresist 61. As shown in (e) of FIG. 7, the electromagnetic interference shielding layer 130 is formed by performing a developing process, an exposing process, an etching process, and the like, in accordance with the pattern formed on the mask 63. As shown in (f) of FIG. 7, the ground member 560 for grounding the electromagnetic interference shielding layer 130 is formed along the edge surface of the electromagnetic interference shielding layer 130. As shown in (g) of FIG. 7, the adhesive layer 340 is formed on the rear surface of the electromagnetic interference shielding layer 130. As shown in (h) of FIG. 7, the protective layer 150 is formed on the rear surface of the adhesive layer 340.

The method of manufacturing the filter illustrated in FIGS. 6 and 7 comprises the forming process of the ground member 560. In other words, after forming the filter on the plasma display apparatus, the forming process of the ground member 560 is not necessary. The forming process of the ground member 560 illustrated in FIGS. 6 and 7 is easily performed using a conductive tape.

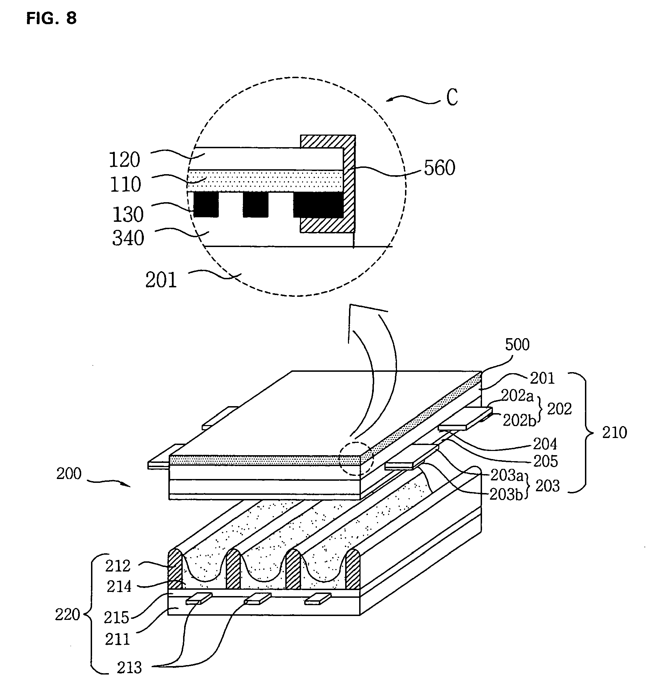

FIG. 8 illustrates a plasma display apparatus comprising the filter for the display apparatus according to the third embodiment of the present invention.

As shown in FIG. 8, the plasma display apparatus according to the third embodiment of the present invention comprises a plasma display panel 200 and a filter 500 formed on the plasma display panel 200.

A structure of the filter 500 included in the plasma display apparatus according to the third embodiment of the present invention will be described below in more detail with reference to a region C indicated in FIG. 8, which is a sectional view of the plasma display apparatus. The filter 500 of the plasma display apparatus comprises one base film layer 110, the anti-reflection layer 120 formed directly on the front surface of the base film layer 110, the electromagnetic interference shielding layer 130 formed directly on the rear surface of the base film layer 110, and the adhesive layer 340 for adhering the filter 500 on the front substrate 201 of the plasma display panel 200 and having at least one of the near infrared ray blocking function or the color correction function. The filter 500 further comprises the conductive film type of ground member for directly contacting the electromagnetic interference shielding layer 130 at the edge surface of the electromagnetic interference shielding layer 130.

The characteristics and the effect of the plasma display apparatus according to the third embodiment of the present invention substantially equal to those of the plasma display apparatus described with reference to FIGS. 1 to 7 are omitted.

As described above, since the plasma display apparatus according to the third embodiment of the present invention comprises the filter for the display apparatus according to the third embodiment of the present invention, an increase in the manufacturing yield and a decrease in the manufacturing cost are achieved, and the functions of the plasma display apparatus are improved.

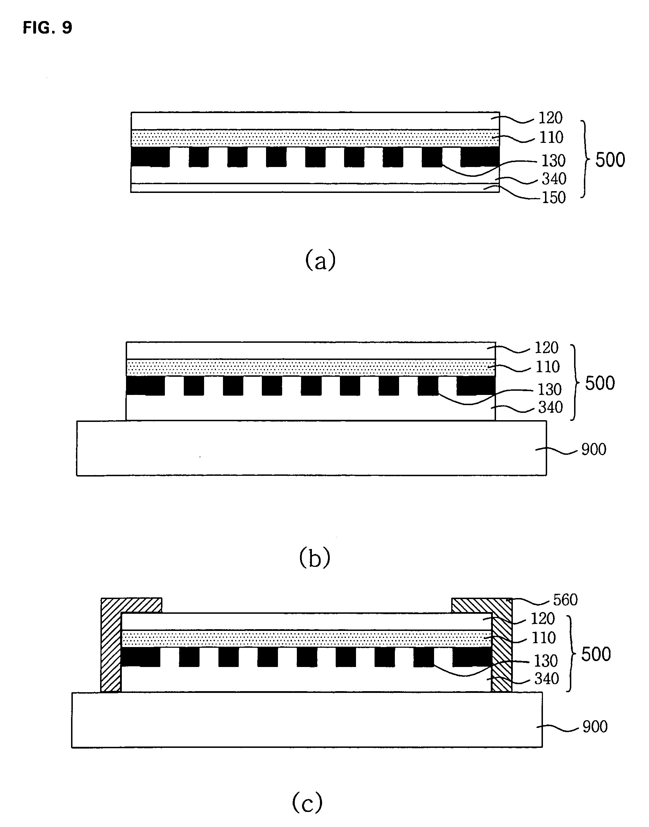

FIG. 9 illustrates still another method of manufacturing the filter for the display apparatus according to the third embodiment of the present invention.

As shown in FIG. 9, the filter according to the third embodiment of the present invention is manufactured by the following processes.

As shown in (a) of FIG. 9, the filter 500 is manufactured using the method illustrated in FIG. 6 or FIG. 7. The method of manufacturing the filter 500 illustrated in FIG. 9 does not comprise the forming process of the ground member. After each of the functional layers of the filter 500 is roughly laminated and is adhered to one another without precisely aligning each of the functional layers, the functional layers are cut so that the length of the side of each of the functional layers equals to one another. Accordingly, a decrease in the manufacturing yield caused by an alignment error is prevented.

As shown in (b) of FIG. 9, the filter 500 is formed on a display apparatus 900 using a laminating method. At this time, the protective layer 150 is removed from the filter 500.

As shown in (C) of FIG. 9, the ground member 560 is formed along the edge surface of the filter 500.

As described above, in the manufacturing method illustrated in FIG. 9, unlike the manufacturing methods illustrated in FIGS. 6 and 7, after forming the filter on the display apparatus, the ground member is formed. In other words, the manufacturing method of the filter does not comprise the forming process of the ground member. The ground member uses a conductive film in the manufacturing method illustrated in FIG. 9. In other words, it is preferable that the ground member is formed using a conductive paste by screen printing.

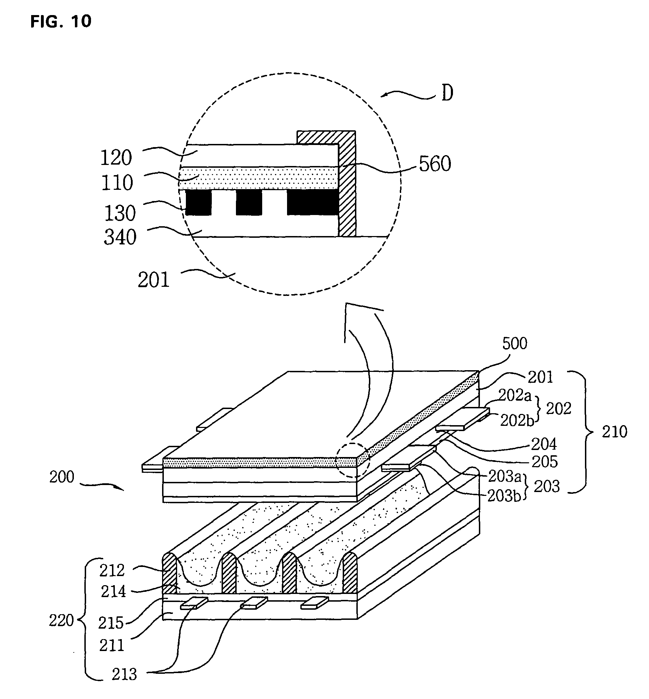

FIG. 10 illustrates another structure of a plasma display apparatus comprising the filter for the display apparatus according to the third embodiment of the present invention.

As shown in FIG. 10, the plasma display apparatus according to the third embodiment of the present invention comprises a plasma display panel 200 and the filter 500 formed on the plasma display panel 200.

A structure of the filter 500 included in the plasma display apparatus according to the third embodiment of the present invention will be described below in more detail with reference to a region D indicated in FIG. 10, which is a sectional view of the plasma display apparatus. The filter 500 of the plasma display apparatus comprises one base film layer 110, the anti-reflection layer 120 formed directly on the front surface of the base film layer 110, the electromagnetic interference shielding layer 130 formed directly on the rear surface of the base film layer 110, and the adhesive layer 340 for adhering the filter 500 on the front substrate 201 of the plasma display panel 200 and having at least one of the near infrared ray blocking function or the color correction function. The filter 500 further comprises the conductive film type of ground member for directly contacting the electromagnetic interference shielding layer 130 at the edge surface of the electromagnetic interference shielding layer 130.

The characteristics and the effect of the display apparatus having another structure according to the third embodiment of the present invention substantially equal to those described with reference to FIGS. 1 to 9 are omitted.

As described above, since the plasma display apparatus according to the embodiments of the present invention comprises the filter for the display apparatus according to the embodiments of the present invention, an increase in the manufacturing yield and a decrease in the manufacturing cost are achieved, and the functions of the plasma display apparatus are improved.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A filter for a display apparatus comprising:
a base film layer;
an anti-reflection layer formed on one surface of the base film layer; and
an electromagnetic interference shielding layer formed on the other surface of the base film layer.

2. The filter for the display apparatus of claim 1, further comprising an adhesive layer formed on the electromagnetic interference shielding layer.

3. The filter for the display apparatus of claim 2, further comprising a protective layer formed on the adhesive layer.

4. The filter for the display apparatus of claim 1, wherein the anti-reflection layer comprises at least one of an external light absorption type or an external light scattering type.

5. The filter for the display apparatus of claim 1, wherein the electromagnetic interference shielding layer comprises a mesh type or a sputter type.

6. The filter for the display apparatus of claim 1, wherein the anti-reflection layer is formed directly on a front surface of the base film layer, and the electromagnetic interference shielding layer is formed directly on a rear surface of the base film layer.

7. A filter for a display apparatus comprising:
a base film layer;
an electromagnetic interference shielding layer formed on the base film layer; and
an adhesive layer formed on the electromagnetic interference shielding layer,
wherein the adhesive layer has at least one of a near infrared ray blocking function or a color correction function.

8. The filter for the display apparatus of claim 7, wherein the adhesive layer comprises at least one of a near infrared ray blocking material or a color correction material.

9. The filter for the display apparatus of claim 8, wherein the near infrared ray blocking material comprises at least one of a near infrared ray blocking pigment or a near infrared ray blocking dye.

10. The filter for the display apparatus of claim 8, wherein the color correction material comprises at least one of a color correction pigment or a color correction dye.

11. The filter for the display apparatus of claim 7, further comprising an anti-reflection layer for absorbing or scattering external light.

12. The filter for the display apparatus of claim 7, further comprising a protective layer formed on the adhesive layer.

13. The filter for the display apparatus of claim 7, wherein the electromagnetic interference shielding layer comprises a mesh type or a sputter type.

14. A filter for a display apparatus comprising:
a base film layer;
an anti-reflection layer formed on a front surface of the base film layer;
an electromagnetic interference shielding layer formed on a rear surface of the base film layer; and
a ground member for contacting the electromagnetic interference shielding layer at an edge surface of the electromagnetic interference shielding layer.

15. The filter for the display apparatus of claim 14, wherein the ground member extends to a perimeter of a front surface of the anti-reflection layer.

16. The filter for the display apparatus of claim 14, wherein the ground member extends to a perimeter of a rear surface of the electromagnetic interference shielding layer.

17. The filter for the display apparatus of claim 14, wherein the ground member extends to a perimeter of a front surface of the anti-reflection layer, and to a perimeter of a rear surface of the electromagnetic interference shielding layer.

18. The filter for the display apparatus of claim 14, wherein the ground member comprises a conductive film.

19. The filter for the display apparatus of claim 14, wherein the ground member comprises a conductive tape.

20. The filter for the display apparatus of claim 14, wherein edges of the base film layer, the anti-reflection layer and the electromagnetic interference shielding layer substantially equal to one another.

21. The filter for the display apparatus of claim 14, further comprising an adhesive layer formed on a rear surface of the electromagnetic interference shielding layer.

22. The filter for the display apparatus of claim 21, wherein the adhesive layer has at least one of a near infrared ray blocking function or a color correction function.

23. The filter for the display apparatus of claim 22, wherein the adhesive layer comprises at least one of a near infrared ray blocking material or a color correction material.

24. The filter for the display apparatus of claim 21, further comprising a protective layer formed on a rear surface of the adhesive layer.

25. The filter for the display apparatus of claim 14, wherein the electromagnetic interference shielding layer comprises a mesh type or a conductive film type.

26. The filter for the display apparatus of claim 14, wherein the anti-reflection layer comprises at least one of an external light absorption type or an external light scattering type.

27. The filter for the display apparatus of claim 14, wherein the anti-reflection layer is formed directly on the front surface of the base film layer, and the electromagnetic interference shielding layer is formed directly on the rear surface of the base film layer.

28. A plasma display apparatus comprising the filter claimed in any one of claims 1, 7 or 14.

29. The plasma display apparatus of claim 28, wherein the filter comprises a glass filter or a film filter.
